(19) Europäisches Patentamt

European Patent Office

Office européen des brevets

(11) **EP 4 726 667 A1**

(12) **EUROPEAN PATENT APPLICATION**

(43) Date of publication:
**15.04.2026 Bulletin 2026/16**

(21) Application number: **25184474.2**

(22) Date of filing: **23.06.2025**

(51) International Patent Classification (IPC):
*G06V 10/25* (2022.01)        *G06V 10/48* (2022.01)

(52) Cooperative Patent Classification (CPC):
**G06V 10/48; G06V 10/25;** G06V 2201/02

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **08.10.2024 IN 202421076392**

(71) Applicant: **Tata Consultancy Services Limited Maharashtra (IN)**

(72) Inventors:
• **THORAT, Tushar Shamarao**
  **411057 Pune, Maharashtra (IN)**
• **SANTHANAM, Sivakumar Kuppusamy**
  **600086 Chennai, Tamil Nadu (IN)**
• **KUMARA, Likhith Prasanna**
  **600113 Chennai, Tamil Nadu (IN)**

(74) Representative: **Goddar, Heinz J.**
  **Boehmert & Boehmert**
  **Anwaltspartnerschaft mbB**
  **Pettenkoferstrasse 22**
  **80336 München (DE)**

(54) **METHOD AND SYSTEM FOR MONITORING ANALOGUE GAUGES USING COMPUTER VISION OPERATIONS**

(57) The embodiments of the present disclosure herein address unresolved problems of analog gauges including manual reading errors, lack of data logging, and difficulty in remote monitoring. Embodiments herein provide a method and system for monitoring analogue gauges using a series of computer vision operations. The invention is a system and method for identifying analog gauge using Hough transform to identify circular patterns in an image to detect scale and then using circular segmentation method to detect needle pattern. The system is configured to digitize the overall process of capturing recording and analyzing meter readings and alert in case of anomalies. The system provides a generic statistical way of solving the problem of identifying analog gauge and then identifying min/max scale with meter readings.

200

**FIG. 2**

EP 4 726 667 A1

# EP 4 726 667 A1

## Description

### CROSS-REFERENCE TO RELATED APPLICATIONS AND PRIORITY

The present application claims priority from Indian provisional application no. 202421076392, filed on October 08, 2024.

### TECHNICAL FIELD

The disclosure herein generally relates to the field of analogue gauges monitoring, and more particularly, a method and system for monitoring analogue gauges using a series of computer vision operations.

### BACKGROUND

In industrial set up, monitoring of various parameters like pressure, voltage, flow rate etc. is of paramount importance in order to maintain up to date functioning of a set up. Analog gauges are used in such scenarios to measure and monitor these conditions. However, existing methods of tracking these conditions are manual, they require human intervention and is also error prone, hence there is a need to digitize measuring and monitoring of analog gauges remotely and monitor this from a centralized command center view.

Existing methods of identifying meter readings and classification object segmentation problem falls in Machine learning (ML), which requires a lot of training data to identify analog gauges. The data set is not easily available to train various types of analog gauges. Further, the ML models require more compute to run and need to be retrained for different gauges. Processing cost increases when computer needs to be reserved for processing. It also increases the latency for getting the reading as the images bytes should be sent to a different system. In addition to this, the analog gauges have limitations such as manual reading errors, lack of data logging, and difficulty in remote monitoring. While detecting the needle and scale of the gauge, lot of contours are detected that are not related to the gauge needle and scale.

### SUMMARY

Embodiments of the present disclosure present technological improvements as solutions to one or more of the above-mentioned technical problems recognized by the inventors in conventional systems. For example, in one embodiment, a method for monitoring analogue gauges using a series of computer vision operations is provided. The processor-implemented method includes receiving, via an input/output (I/O) interface, a real-time feed of an analogue gauge from a set of pre-arranged digital cameras, and pre-processing the received real-time feed of an analogue gauge using a low pass filter to reduce noise and sharpness of at least one image of the real-time feed, wherein an adaptive thresholding is performed on the image based on values of pixels around a region with different lighting conditions to obtain edges.

Further, the processor-implemented method includes identifying one or more circles of the pre-processed at least one image using a Hough circle transform technique and one or more edge points of the pre-processed at least one image using a gradient information and selecting at least one of the plurality of circles with a minimum radius to cover a predefined threshold circular region.

Furthermore, the processor-implemented method includes creating a radial spokes ring using center of the selected at least one circle, determining at least one line of each of a plurality of scales corresponding to the identified one or more circles using a Hough line transform. Herein, an optimal width of the radial spokes ring is determined to capture the plurality of scales in the predefined threshold circular region and the plurality of scales is extrapolated towards the center of the identified one or more circles to get a scale region a needle is allowed to traverse. Further, the processor-implemented method includes analyzing the scale region allowed to traverse to determine a minimum and a maximum value of the scale at extreme ends of the circle and segmenting the scale region using pixel intensity to check in which segment the needle is present. Herein, the scale is segmented into a predefined parts to increase precision of a meter reading and a pixel mean is calculated for each segment and in the segment with lowest intensity is the one containing the needle.

In another embodiment, a system for monitoring analogue gauges using a series of computer vision operations is provided. The system comprises a memory storing a plurality of instructions, one or more Input/Output (I/O) interfaces, and one or more hardware processors coupled to the memory via the one or more I/O interfaces. The one or more hardware processors are configured by the instructions to receive a real-time feed of an analogue gauge from a set of pre-arranged digital cameras and pre-process the received real-time feed of an analogue gauge using a low pass filter to reduce noise and sharpness of at least one image of the real-time feed, wherein an adaptive thresholding is performed on the image based on values of pixels around a region with different lighting conditions to obtain edges.

The one or more hardware processors are configured by the instructions to identify one or more circles of the pre-processed at least one image using a Hough circle transform technique, identify one or more edge points of the pre-processed at least one image using a gradient information, and select at least one of the plurality of circles with a minimum radius to cover a predefined threshold circular region. Further, the one or more hardware processors are configured by the instructions to create a radial spokes ring using center of the selected at least one circle and determine at least one line of each of a plurality of scales using a Hough line transform. wherein an optimal width of the radial spokes ring is determined to capture the plurality of scales in the predefined threshold circular region. The plurality of scales is extrapolated towards the center of the identified plurality of circles to get a scale region to be traversed by a needle.

Further, the one or more hardware processors are configured by the instructions to analyze the scale region allowed to traverse to determine a minimum and a maximum value of the scale at extreme ends of the selected circle and segment the scale region using pixel intensity to check in which segment the needle is present. Herein, the scale region is segmented iteratively into an optimal number of parts to increase precision of a meter reading, and the optimal number is decided by maximizing the pixel intensity difference between a lowest and a preceding segment. A pixel mean is calculated for each segment and in the segment with lowest intensity is the one containing the needle.

In yet another aspect, there are provided one or more non-transitory machine-readable information storage mediums comprising one or more instructions, which when executed by one or more hardware processors causes a method for monitoring analogue gauges using a series of computer vision operations is provided. The processor-implemented method includes receiving, via an input/output (I/O) interface, a real-time feed of an analogue gauge from a set of pre-arranged digital cameras, and pre-processing the received real-time feed of an analogue gauge using a low pass filter to reduce noise and sharpness of at least one image of the real-time feed, wherein an adaptive thresholding is performed on the image based on values of pixels around a region with different lighting conditions to obtain edges.

Further, the processor-implemented method includes identifying one or more circles of the pre-processed at least one image using a Hough circle transform technique and one or more edge points of the pre-processed at least one image using a gradient information and selecting at least one of the plurality of circles with a minimum radius to cover a predefined threshold circular region.

Furthermore, the processor-implemented method includes creating a radial spokes ring using center of the selected at least one circle, determining at least one line of each of a plurality of scales corresponding to the identified one or more circles using a Hough line transform. Herein, an optimal width of the radial spokes ring is determined to capture the plurality of scales in the predefined threshold circular region and the plurality of scales is extrapolated towards the center of the identified one or more circles to get a scale region a needle is allowed to traverse. Further, the processor-implemented method includes analyzing the scale region allowed to traverse to determine a minimum and a maximum value of the scale at extreme ends of the circle and segmenting the scale region using pixel intensity to check in which segment the needle is present. Herein, the scale is segmented into a predefined parts to increase precision of a meter reading and a pixel mean is calculated for each segment and in the segment with lowest intensity is the one containing the needle.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates a block diagram of a system for monitoring analogue gauges using a series of computer vision operations, according to some embodiments of the present disclosure.

FIG. 2A and 2B collectively referred to as FIG. 2 is a functional block diagram illustrating the system of FIG. 1, for monitoring analogue gauges using a series of computer vision operations, according to some embodiments of the present disclosure.

FIG. 3A and 3B is an exemplary flow diagram illustrating a processor-implemented method for monitoring analogue gauges using a series of computer vision operations, according to some embodiments of the present disclosure.

FIG. 4 is a schematic diagram to detect the scales on the gauge using a Hough Line Transform, according to some embodiments of the present disclosure.

FIG. 5 is a schematic diagram to separate out the scales from the gauge by drawing a ring of spokes and adding bit wise the pixel values of the edges from the gauge, according to some embodiments of the present disclosure.

FIG. 6 is a schematic diagram to illustrate different types of gauges with minimum and maximum present in different quadrants, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Analog gauges are commonly used in various industrial and engineering applications to display measurements such as pressure, temperature, fluid levels, and more. However, analog gauges have limitations, including manual reading errors, lack of data logging, and difficulty in remote monitoring.

Embodiments herein provide a method and system for monitoring analogue gauges using a series of computer vision operations. The invention is a system and method for identifying analog gauge using Hough transform to identify circular patterns in an image to detect scale and then using circular segmentation method to detect needle pattern. The system is configured to digitize the overall process of capturing recording and analyzing meter readings and alert in case of anomalies. The system provides a generic statistical way of solving the problem of identifying analog gauge and then identifying min/max scale with meter readings.

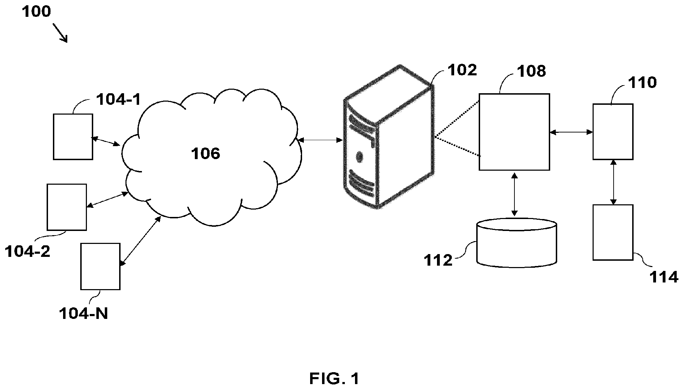

Referring now to the drawings, and more particularly to FIG. 1 through FIG. 6, where similar reference characters denote corresponding features consistently throughout the figures, there are shown preferred embodiments, and these embodiments are described in the context of the following exemplary system and/or method.

FIG. 1 illustrates a block diagram of a system 100 for monitoring analogue gauges using a series of computer vision operations, according to some embodiments of the present disclosure. Although the present disclosure is explained considering that the system 100 is implemented on a server, it may be understood that the system 100 may comprise one or more computing devices 102, such as a laptop computer, a desktop computer, a notebook, a workstation, a cloud-based computing environment and the like. It will be understood that the system 100 may be accessed through one or more input/output interfaces 104-1, 104-2... 104-N, collectively referred to as I/O interface 104. Examples of the I/O interface 104 may include, but are not limited to, a user interface, a portable computer, a personal digital assistant, a handheld device, a smartphone, a tablet computer, a workstation, and the like. The I/O interface 104 is communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 supports various connectivity options such as BLUETOOTH®, USB, ZigBee, and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. Further, the system 100 comprises at least one memory 110 with a plurality of instructions, one or more databases 112, and one or more hardware processors 108 which are communicatively coupled with the at least one memory to execute a plurality of modules 114 therein. The components and functionalities of the system 100 are described further in detail.

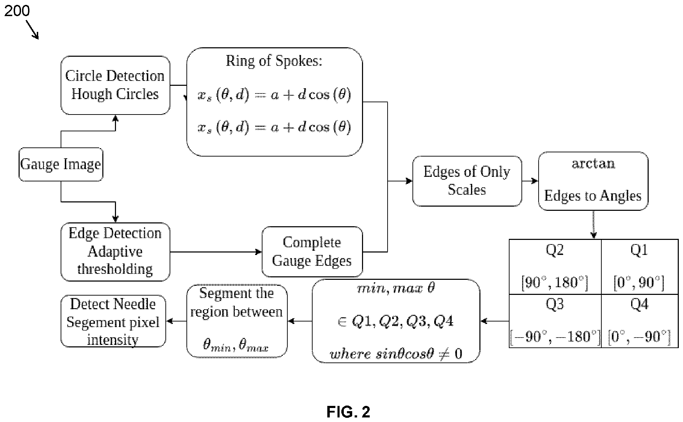

FIG. 2A and 2B (collectively referred as FIG. 2) is a functional block diagram 200 to illustrate the system 100 for the dynamic prediction of component-wise biomass saturation using non-invasive sensing, according to some embodiments of the present disclosure. In one embodiment, the system 100 is configured for monitoring analogue gauges using a series of computer vision operations. The system 100 is configured to capture at least one image from a real-time feed and apply a Low Pass Filter for reducing the noise in the image, the kernel size and anchor point by applying the low pass filter as chosen hyper parameter for reducing conventional blur. Further, circular patterns present in the images are detected using Hough Circle Transforms and a center point of one or more circles is detected.

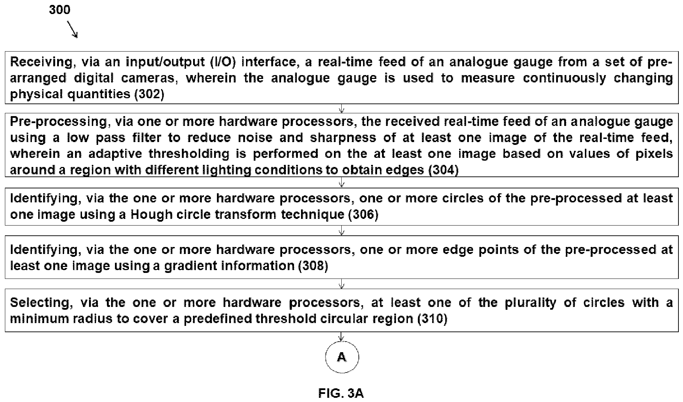

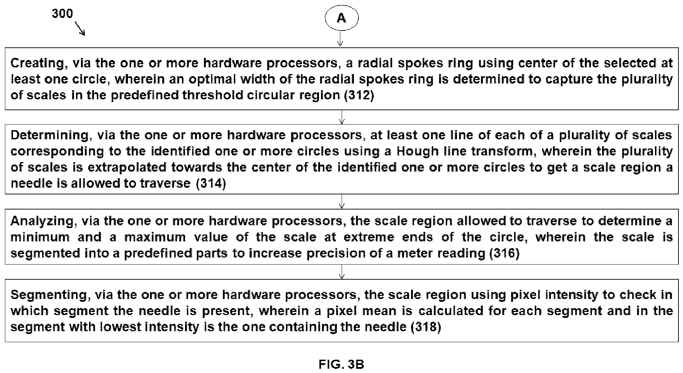

FIG. 3A and 3B (collectively referred as FIG. 3) is a flow diagram illustrating a processor-implemented method 300 for the dynamic prediction of component-wise biomass saturation using non-invasive sensing implemented by the system 100 of FIG. 1, in accordance with an embodiment of the present disclosure. Functions of the components of the system 100 are now explained through steps of flow diagram in FIG. 3, according to some embodiments of the present disclosure. In the method and system for monitoring analogue gauges using a series of computer vision operations.

Initially, at step 302 of the processor-implemented method 300, the one or more hardware processors 108 are configured by the programmed instructions to receive a real-time feed of an analogue gauge from a set of pre-arranged digital cameras. The analogue gauge is used to measure continuously changing physical quantities.

At the next step 304 of the processor-implemented method 300, the one or more hardware processors 108 are configured by the programmed instructions to pre-process the received real-time feed of an analogue gauge using a low pass filter to reduce noise and sharpness of at least one image of the real-time feed. The images are processed to get an accurate reading of the analogue gauge using a series of computer vision operations. The images got from the real world usually have noise content in them. Noise can obscure important features in an image, such as edges, textures, and fine details. The Convolutional blur is calculated by:

$$I_{\text{blur}}(x, y) = \sum_{i=-k}^{k} \sum_{j=-k}^{k} I(x + i, y + j) \cdot K(i, j) \qquad (1)$$

wherein, $I_{\text{blur}}(x, y)$ is the intensity of the blurred image at pixel $(x, y)$;
$I(x + i, y + j)$ is the intensity of the original image at pixel $(x + i, y + j)$;
$(K(i,j))$ is the kernel matrix used for blurring.

Herein, an adaptive thresholding is performed on the image based on values of pixels around a region with different lighting conditions to obtain edges. Further, a kernel size and an anchor point are chosen as a hyper parameter for applying the low pass filter.

At the next step 306 of the processor-implemented method 300, the one or more hardware processors 108 are configured by the programmed instructions to identify one or more circles of the pre-processed at least one image using a Hough circle transform technique:

$$(x - a)^2 + (y - b)^2 = r^2 \qquad (2)$$

wherein, $(a, b)$ are the coordinates of the center of the circle, $(r)$ is the radius of the circle, and $(x, y)$ are the coordinates of points on the circumference of the circle.

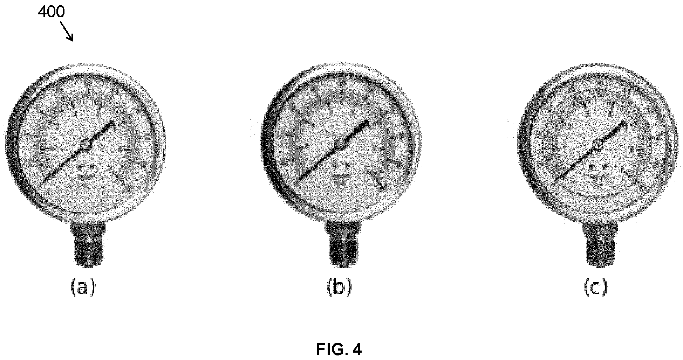

FIG. 4 is a schematic diagram to detect the scales on the gauge using a Hough Line Transform, according to some embodiments of the present disclosure. In one aspect, one or more circular patterns present in the at least one image are identified using Hough Circle Transforms. The Hough Circle Transform is a feature extraction technique used in image analysis to detect circles in an image. It is an extension of the Hough Transform, which is commonly used for detecting lines.

At the next step 308 of the processor-implemented method 300, the one or more hardware processors 108 are configured by the programmed instructions to identify one or more edge points of the pre-processed at least one image using a gradient information:

$$a = x_i - r \cos(\theta) \qquad (3)$$

$$b = y_i - r \sin(\theta) \qquad (4)$$

wherein, $(\theta)$ ranges from $(0)$ to $(2\pi)$.

At the next step 310 of the processor-implemented method 300, the one or more hardware processors 108 are configured by the programmed instructions to select at least one of the plurality of circles with a minimum radius to cover a predefined threshold circular region.

At the next step 312 of the processor-implemented method 300, the one or more hardware processors 108 are configured by the programmed instructions to create a radial spokes ring using center of the selected at least one circle. Wherein an optimal width of the radial spokes ring is determined to capture the plurality of scales in the predefined threshold circular region:

$$x_s(\theta, d) = a + d \cos(\theta) \qquad (5)$$

$$y_s(\theta, d) = b + d \sin(\theta) \qquad (6)$$

wherein, $x_s(\theta, d)$ and $y_s(\theta, d)$ are the coordinates of the point along the spoke at distance d from the center, $x_s(\theta, d)$ and $y_s(\theta, d)$ are the coordinate of the point along the spoke at distance d from the center and $(\theta)$ ranges from $(0)$ to $(2\pi)$, (d) ranges from $(r)$ to $(r - D)$, $D$ is the width of the ring, r is the radius of the circle.

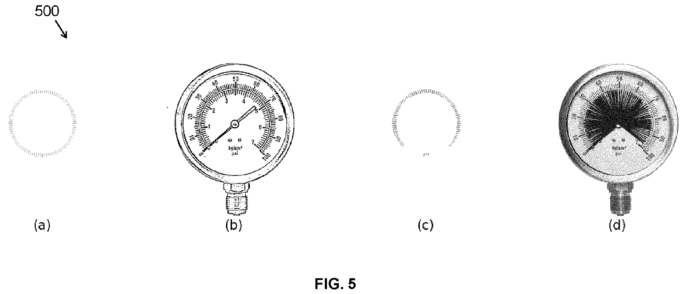

For detecting the scales on the gauge, Hough Line Transform is used and from there lines corresponding to the scales are filtered out. Since there may be lot other lines related to handle, number etc. Therefore, to fix this issue, the radial ring of spokes is generated with the spokes pointed inwards towards the center of the circle, to separate the pixels related only to the scales as shown in the FIG. 5.

Further, an adaptive thresholding is performed on the original image to get the clear edges and reduce the noise in the pixels. Regular thresholding is a method where if the pixel value is below a certain value, then it's set to 0 else it is set to max value. This technique filters out pixels with certain threshold value. This would not work out for image with regions with different lighting conditions, so it is preferable to use adaptive thresholding where the threshold value is selected based on the pixel's values around that region. The adaptive thresholding is done by the following formula:

$$T(x,y) = \frac{1}{W}\sum_{(i,j)\,\in\,\text{block}(x,y)} I(i,j)\cdot G(i,j) - C \qquad (7)$$

wherein, $T(x, y)$ is the threshold value for the pixel $(x, y)$;
$I(i,j)$ is the intensity value of the pixel at $(i,j)$ within the neighborhood block centered at $(x, y)$;
$G(i,j)$ is the Gaussian weight applied to the pixel $(i,j)$;
$W$ is the sum of the Gaussian weights in the block;
$C$ is the constant subtracted from the weighted sum;
block$(x, y)$ is a grid of pixels surrounding $(x, y)$.

At the next step 314 of the processor-implemented method 300, the one or more hardware processors 108 are configured by the programmed instructions to determine at least one line of each of a plurality of scales using a Hough line transform. The plurality of scales is extrapolated towards the center of the identified plurality of circles to get a scale region to be traversed by a needle.

At the next step 316 of the processor-implemented method 300, the one or more hardware processors 108 are configured by the programmed instructions to analyze the scale region allowed to traverse to determine a minimum and a maximum value of the scale at extreme ends of the selected circle. Herein, an image of radial spokes ring and an image of one or more edges is added with bitwise operation to find an overlapping feature between the two images to obtain the region where the scales are present in the images. The scale region is segmented iteratively into an optimal number of parts to increase precision of a meter reading, wherein the optimal number is decided by maximizing the pixel intensity difference between a lowest and a preceding segment.

FIG. 5 is a schematic diagram to separate out the scales from the gauge by drawing a ring of spokes and adding bit wise the pixel values of the edges from the gauge, according to some embodiments of the present disclosure. Wherein, two images, one with radial spokes and the other with pixels, are selected through the adaptive thresholding. Both these images are added with bitwise operation to get the pixels common to both images. This operation gives the pixels corresponding to the scale of the gauge. Using this image, the Hough Line transform is performed to get only those lines corresponding to the scales of the gauge.

These sets of lines are converted to a set of angles by doing the tan inverse operation on the slope of the lines. It provides a list of angles ranging from - 180 to 180, but the minimum and maximum angles that correspond to the minimum and maximum value on the scale are needed. This is done by grouping the angles into four different quadrants by using the intervals, 0 to 90 for Q1, 90 to 180 for Q2, -180 to -90 for Q3 and -90 to 0 for Q4.

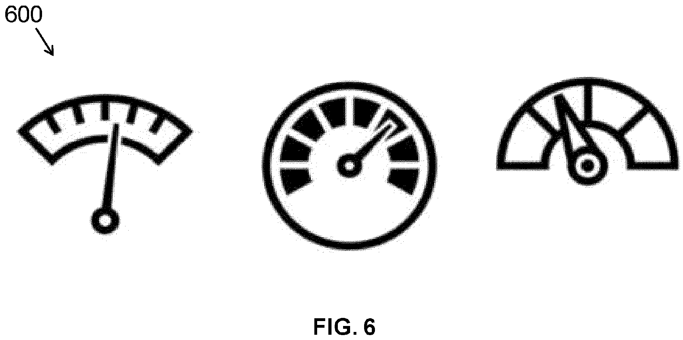

Further, from the grouping of the angles, maximum and minimum angles are obtained from the list of angles. The scale region is segmented, and the segmentation is done to check in which segment the needle is present. In each of the segments the pixel intensity can be calculated where the pixel intensity in the segment that has the needle will be less as the needle is darker in comparison to the background. By increasing the number of segments, the precision of the measurement is increased. By this technique, the segment in which the needle is present is reported and thus the percentage from minimum till the maximum as shown in FIG. 6.

Finally, at the last step 318 of the processor-implemented method 300, the one or more hardware processors 108 are configured by the programmed instructions to segment the scale region using pixel intensity to check in which segment the needle is present. Herein, a pixel mean is calculated for each segment and in the segment with lowest intensity is the one containing the needle.

The proposed invention can be used where digital devices are prohibited. One of the important places is an energy sector wherein the analogue gauges are used to measure pressure, temperature and flow. There are restrictions on electrical devices as they can pose fire hazard from electrical radiation. In those cases, the readings can be collected by placing a set of cameras and processed onsite with edge processing.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address unresolved problems of analog gauges including manual reading errors, lack of data logging, and difficulty in remote monitoring. Embodiments herein provide a method and system for monitoring analogue gauges using a series of computer vision operations. The invention is a system and method for identifying analog gauge using Hough transform to identify circular patterns in an image to detect scale and then using circular segmentation method to detect needle pattern. The system is configured to digitize the overall process of capturing recording and analyzing meter readings and alert in case of anomalies. The system provides a generic statistical way of solving the problem of identifying analog gauge and then identifying min/max scale with meter readings.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (300) comprising:

receiving (302), via an input/output (I/O) interface, a real-time feed of an analogue gauge from a set of pre-arranged digital cameras, wherein the analogue gauge is used to measure continuously changing physical quantities;
pre-processing (304), via one or more hardware processors, the received real-time feed of an analogue gauge using a low pass filter to reduce noise and sharpness of at least one image of the real-time feed, wherein an adaptive thresholding is performed on the at least one image based on values of pixels around a region with different lighting conditions to obtain edges;

identifying (306), via the one or more hardware processors, one or more circles of the pre-processed at least one image using a Hough circle transform technique;

identifying (308), via the one or more hardware processors, one or more edge points of the pre-processed at least one image using a gradient information:

> selecting (310), via the one or more hardware processors, at least one of the plurality of circles with a minimum radius to cover a predefined threshold circular region;
>
> creating (312), via the one or more hardware processors, a radial spokes ring using center of the selected at least one circle, wherein an optimal width of the radial spokes ring is determined to capture the plurality of scales in the predefined threshold circular region;
>
> determining (314), via the one or more hardware processors, at least one line of each of a plurality of scales corresponding to the identified one or more circles using a Hough line transform, wherein the plurality of scales is extrapolated towards the center of the identified one or more circles to get a scale region a needle is allowed to traverse;
>
> analyzing (316), via the one or more hardware processors, the scale region allowed to traverse to determine a minimum and a maximum value of the scale at extreme ends of the circle, wherein the scale is segmented into a predefined parts to increase precision of a meter reading; and
>
> segmenting (318), via the one or more hardware processors, the scale region using pixel intensity to check in which segment the needle is present, wherein a pixel mean is calculated for each segment and in the segment with lowest intensity is the one containing the needle.

2. The processor-implemented method (300) as claimed in claim 1, wherein a kernel size and an anchor point are selected as a hyper parameter for applying the low pass filter.

3. The processor-implemented method (300) as claimed in claim 1, wherein an image of radial spokes ring and an image of one or more edges is added with bitwise operation to find an overlapping feature between the two images to obtain the region where the scales are present in the images.

4. The processor-implemented method (300) as claimed in claim 1, wherein one or more edge points are identified using the gradient information:

$$a = x_i - r \cos(\theta)$$

$$b = y_i - r \sin(\theta)$$

wherein, ($a$, $b$) are the coordinates of the center of the circle, ($r$) is the radius of the circle, ($x$, $y$) are the coordinates of points on the circumference of the circle, and ($\theta$) ranges from (0) to ($2\pi$).

5. The processor-implemented method (300) as claimed in claim 1, wherein an optimal width is decided by maximizing the pixel intensity difference between a lowest and a preceding segment.

6. The processor-implemented method (300) as claimed in claim 1, wherein an optimal width of the radial spokes ring is determined to capture the plurality of scales in the predefined threshold circular region follows:

$$x_s(\theta, d) = a + d \cos(\theta)$$

$$y_s(\theta, d) = b + d \sin(\theta)$$

wherein, $x_s(\theta, d)$ and $y_s(\theta, d)$ are the coordinates of the point along the spoke at distance d from the center, $x_s(\theta, d)$ and $y_s(\theta, d)$ are the coordinate of the point along the spoke at distance d from the center, and ($\theta$) ranges from (0) to ($2\pi$), ($d$) ranges from ($r$) to ($r$ - $D$), $D$ is the width of the ring, r is the radius of the circle.

7. A system (100) comprising:

a memory (110) storing instructions;

one or more Input/Output (I/O) interfaces (104); and
one or more hardware processors (108) coupled to the memory (110) via the one or more I/O interfaces (104), wherein the one or more hardware processors (108) are configured by the instructions to:

receive a real-time feed of an analogue gauge from a set of pre-arranged digital cameras, wherein the analogue gauge is used to measure continuously changing physical quantities;
pre-process the received real-time feed of an analogue gauge using a low pass filter to reduce noise and sharpness of at least one image of the real-time feed, wherein an adaptive thresholding is performed on the at least one image based on values of pixels around a region with different lighting conditions to obtain edges;
identify one or more circles of the pre-processed at least one image using a Hough circle transform technique;
identify one or more edge points of the pre-processed at least one image using a gradient information;
select at least one of the plurality of circles with a minimum radius to cover a predefined threshold circular region;
create a radial spokes ring using center of the selected at least one circle, wherein an optimal width of the radial spokes ring is determined to capture the plurality of scales in the predefined threshold circular region;
determine at least one line of each of a plurality of scales corresponding to the identified one or more circles using a Hough line transform, wherein the plurality of scales is extrapolated towards the center of the identified one or more circles to get a scale region a needle is allowed to traverse;

analyze the scale region allowed to traverse to determine a minimum and a maximum value of the scale at extreme ends of the circle, wherein the scale is segmented into a predefined parts to increase precision of a meter reading; and
segment the scale region using pixel intensity to check in which segment the needle is present, wherein a pixel mean is calculated for each segment and in the segment with lowest intensity is the one containing the needle.

8. The system (100) as claimed in claim 7, wherein a kernel size and an anchor point are selected as a hyper parameter for applying the low pass filter.

9. The system (100) as claimed in claim 7, wherein an image of radial spokes ring and an image of one or more edges is added with bitwise operation to find an overlapping feature between the two images to obtain the region where the scales are present in the images.

10. The system (100) as claimed in claim 7, wherein one or more edge points are identified using the gradient information:

$$a = x_i - r\cos(\theta)$$

$$b = y_i - r\sin(\theta)$$

wherein, ($a$, $b$) are the coordinates of the center of the circle, ($r$) is the radius of the circle, $(x, y)$ are the coordinates of points on the circumference of the circle, and ($\theta$) ranges from (0) to ($2\pi$).

11. The system (100) as claimed in claim 7, wherein an optimal width is decided by maximizing the pixel intensity difference between a lowest and a preceding segment.

12. The system (100) as claimed in claim 7, wherein an optimal width of the radial spokes ring is determined to capture the plurality of scales in the predefined threshold circular region following:

$$x_s(\theta, d) = a + d\cos(\theta)$$

$$y_s(\theta, d) = b + d\sin(\theta)$$

wherein, $x_s(\theta, d)$ and $y_s(\theta, d)$ are the coordinates of the point along the spoke at distance d from the center, $x_s(\theta, d)$ and $y_s(\theta, d)$ are the coordinate of the point along the spoke at distance d from the center, and ($\theta$) ranges from (0) to ($2\pi$), ($d$) ranges from (r) to ($r$ - $D$), $D$ is the width of the ring, r is the radius of the circle.

13. One or more non-transitory machine-readable information storage mediums comprising one or more instructions which when executed by one or more hardware processors cause:

receiving, via an input/output (I/O) interface, a real-time feed of an analogue gauge from a set of pre-arranged digital cameras, wherein the analogue gauge is used to measure continuously changing physical quantities;
pre-processing the received real-time feed of an analogue gauge using a low pass filter to reduce noise and sharpness of at least one image of the real-time feed, wherein an adaptive thresholding is performed on the at least one image based on values of pixels around a region with different lighting conditions to obtain edges;
identifying one or more circles of the pre-processed at least one image using a Hough circle transform technique;
identifying one or more edge points of the pre-processed at least one image using a gradient information:

selecting at least one of the plurality of circles with a minimum radius to cover a predefined threshold circular region;
creating a radial spokes ring using center of the selected at least one circle, wherein an optimal width of the radial spokes ring is determined to capture the plurality of scales in the predefined threshold circular region;
determining at least one line of each of a plurality of scales corresponding to the identified one or more circles using a Hough line transform, wherein the plurality of scales is extrapolated towards the center of the identified one or more circles to get a scale region a needle is allowed to traverse;
analyzing the scale region allowed to traverse to determine a minimum and a maximum value of the scale at extreme ends of the circle, wherein the scale is segmented into a predefined parts to increase precision of a meter reading; and
segmenting the scale region using pixel intensity to check in which segment the needle is present, wherein a pixel mean is calculated for each segment and in the segment with lowest intensity is the one containing the needle.

14. The one or more non-transitory machine readable information storage mediums as claimed in claim 13, wherein a kernel size and an anchor point are selected as a hyper parameter for applying the low pass filter.

15. The one or more non-transitory machine readable information storage mediums as claimed in claim 13, wherein an image of radial spokes ring and an image of one or more edges is added with bitwise operation to find an overlapping feature between the two images to obtain the region where the scales are present in the images.

**FIG. 1**

200

**FIG. 2**

300

Receiving, via an input/output (I/O) interface, a real-time feed of an analogue gauge from a set of pre-arranged digital cameras, wherein the analogue gauge is used to measure continuously changing physical quantities (302)

Pre-processing, via one or more hardware processors, the received real-time feed of an analogue gauge using a low pass filter to reduce noise and sharpness of at least one image of the real-time feed, wherein an adaptive thresholding is performed on the at least one image based on values of pixels around a region with different lighting conditions to obtain edges (304)

Identifying, via the one or more hardware processors, one or more circles of the pre-processed at least one image using a Hough circle transform technique (306)

Identifying, via the one or more hardware processors, one or more edge points of the pre-processed at least one image using a gradient information (308)

Selecting, via the one or more hardware processors, at least one of the plurality of circles with a minimum radius to cover a predefined threshold circular region (310)

A

FIG. 3A

300

( A )

Creating, via the one or more hardware processors, a radial spokes ring using center of the selected at least one circle, wherein an optimal width of the radial spokes ring is determined to capture the plurality of scales in the predefined threshold circular region (312)

Determining, via the one or more hardware processors, at least one line of each of a plurality of scales corresponding to the identified one or more circles using a Hough line transform, wherein the plurality of scales is extrapolated towards the center of the identified one or more circles to get a scale region a needle is allowed to traverse (314)

Analyzing, via the one or more hardware processors, the scale region allowed to traverse to determine a minimum and a maximum value of the scale at extreme ends of the circle, wherein the scale is segmented into a predefined parts to increase precision of a meter reading (316)

Segmenting, via the one or more hardware processors, the scale region using pixel intensity to check in which segment the needle is present, wherein a pixel mean is calculated for each segment and in the segment with lowest intensity is the one containing the needle (318)

FIG. 3B

400

(a)                    (b)                    (c)

FIG. 4

FIG. 5

600

**FIG. 6**

Europäisches Patentamt
European Patent Office
Office européen des brevets

## EUROPEAN SEARCH REPORT

**Application Number**

EP 25 18 4474

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 112 101 350 A (YUNNAN INSTITUTE OF MEASURING AND TESTING TECH) 18 December 2020 (2020-12-18) * abstract * | 1-15 | INV. G06V10/25 G06V10/48 |
| A | ZHANG YI ET AL: "Research on local instrument data collection method in ship engine room based on machine vision", 2023 4TH INTERNATIONAL CONFERENCE ON COMPUTER ENGINEERING AND INTELLIGENT CONTROL (ICCEIC), IEEE, 20 October 2023 (2023-10-20), pages 386-393, XP034545638, DOI: 10.1109/ICCEIC60201.2023.10426691 [retrieved on 2024-02-14] * abstract * * page 4, left-hand column, section B, first paragraph * * page 4, left-hand column, last paragraph, line 1 - right-hand column, fourth last paragraph, last line * | 1-15 | |
| A | LI XINGXING ET AL: "Analog Gauge Reader based on Image Recognition", JOURNAL OF PHYSICS: CONFERENCE SERIES, vol. 1650, no. 3, 1 October 2020 (2020-10-01), pages 1-9, XP093314310, Bristol, GB ISSN: 1742-6588, DOI: 10.1088/1742-6596/1650/3/032061 Retrieved from the Internet: URL:https://iopscience.iop.org/article/10.1088/1742-6596/1650/3/032061/pdf> * abstract * * page 5, second last paragraph * | 1-15 | **TECHNICAL FIELDS SEARCHED (IPC)** G06V |

-/--

The present search report has been drawn up for all claims

| Place of search | Date of completion of the search | Examiner |
|---|---|---|
| The Hague | 15 September 2025 | Sagrebin-Mitzel, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

# EUROPEAN SEARCH REPORT

**Application Number**

EP 25 18 4474

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/043072 A1 (KUSAKA TSUBASA [JP] ET AL) 11 February 2021 (2021-02-11) * the whole document * ----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 15 September 2025 | Sagrebin-Mitzel, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

............................................................................................
& : member of the same patent family, corresponding
document

EPO FORM 1503 03.82 (P04C01)

page 2 of 2

## ANNEX TO THE EUROPEAN SEARCH REPORT
## ON EUROPEAN PATENT APPLICATION NO.

EP 25 18 4474

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2025

| Patent document cited in search report | | Publication date | Patent family member(s) | | Publication date |
|---|---|---|---|---|---|
| CN 112101350 | A | 18-12-2020 | NONE | | |
| US 2021043072 | A1 | 11-02-2021 | CN | 112041906 A | 04-12-2020 |
| | | | CN | 115035069 A | 09-09-2022 |
| | | | JP | 6609345 B2 | 20-11-2019 |
| | | | JP | 2019192168 A | 31-10-2019 |
| | | | US | 2021043072 A1 | 11-02-2021 |
| | | | WO | 2019208036 A1 | 31-10-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421076392